# EUROPEAN PATENT SPECIFICATION

(11) **EP 4 413 444 B1**
(45) Date of publication and mention of the grant of the patent: **23.09.2026**
(21) Application number: 22769841.2
(22) Date of filing: 24.08.2022
(51) Int. Cl.: G06F 3/01, H02M 7/48, G02B 27/01, G02B 27/00

(54) **LOW POWER EFFICIENCY RF FACIAL MOVEMENT DETECTION SCHEME**
RF-GESICHTSBEWEGUNGSDETEKTIONSSCHEMA MIT NIEDRIGER LEISTUNGSEFFIZIENZ
SCHÉMA DE DÉTECTION DE MOUVEMENT FACIAL PAR RF À FAIBLE CONSOMMATION ÉNERGÉTIQUE

(30) Priority: 05.10.2021 US 202163252595 P; 10.12.2021 US 202117548441
(43) Date of publication of application: 14.08.2024
(73) Proprietor: Microsoft Technology Licensing, LLC, Redmond, WA 98052-6399 (US)
(72) Inventor: PARK, Chang Joon, Redmond, Washington 98052-6399 (US); GALINSKI, Martin Francis, III, Redmond, Washington 98052-6399 (US)
(74) Representative: Goddar, Heinz J.
(86) International application number: PCT/US2022/041286
(87) International publication number: WO 2023/059404

(56) References cited:
- US-A- 3 503 007
- US-A1- 2009 219 039
- US-A1- 2020 085 084
- US-B1- 10 564 717

## Description

### BACKGROUND

Mixed Reality (MR), like Augmented Reality (AR) and Virtual Reality (VR), is an industry with a rapidly expanding footprint. An MR device may be implemented with a headset that includes video and audio components to provide the immersive MR experience. Sensors, such as gyroscopic sensors, may be located on or within the headset to sense physical movement of the user. Additional sensors may be located about the headset to track eye gaze of the user, sense audible commands from the user, and to sense other aspects of the user.

Various face tracking schemes that may be employed to sense small movements of the user's skin, which can be processed to identify facial expression and other indicia that may be used to enhance the immersive MR experience. In one example scheme, a headset may be equipped with circuits that include a number of sense antennas that are positioned about various locations of the headset. The antennas signals may feed into an LC resonance circuit, which is driven to a resonance by an LC driver. The output of the LC resonance circuit may feed into a sense amplifier to provide suitable signals for an Analog-to-Digital Converter (ADC), which can convert the sensed signals into the digital domain for further processing. Capacitance of the LC resonance circuit varies depending on the distance between the sense antennas on the headset and the facial skin of the user. The distance between the skin and the antennas varies may also vary with the facial expression of the user due to movement of the skin from facial muscles. Thus, the total capacitance of the LC resonance circuit, and thus the characteristic transient response and Q of the LC resonance circuit, will vary based on the user's facial movements and the resulting varied distance between the antennas and the user's skin.

The present disclosure contemplates that a conventional implementation of an LC resonant drive circuit may require relatively high power-supply levels. This is in part due to the overall design of a conventional system, where the amplitude of the sensed signal from the LC resonance circuit should be as large as possible to maximize the resolution of the analog to digital conversion process by the ADC.

The presently disclosed techniques propose a low power solution for a MR wearable device to achieve sufficient resolution without requiring high voltages for the power-supply, and without sacrificing signal quality. Power is conserved such that the battery life of the MR device may be extended, while system performance is enhanced. The disclosure made herein is presented with respect to these and other technical challenges.

US 10,564,717 B1 discloses an interactive system such as a head-mounted-display device including (1) a facial coupling subsystem having electrodes configured to conduct at least one biopotential signal generated by a user's body, (2) a receiving subsystem electrically connected to the facial coupling subsystem and configured to receive, from the user's body via at least one electrode of the facial coupling subsystem, the biopotential signal, and (3) a detection subsystem electrically connected to the receiving subsystem and configured to (a) determine at least one characteristic of the biopotential signal and (b) use the at least one characteristic of the biopotential signal to determine a gaze direction of an eye of the user and/or a facial gesture of the user. In an example, the electrodes of the facial coupling subsystem comprise non-contact electrodes, which may be used to detect facial movements in a capacitive sensing method.

US 2009/219039 A1 discloses a circuit for detecting the presence, position or the approach of an object in an observation area. The circuit has a sensor electrode assembly with an electrode that forms part of a capacitor system whose capacitance relative to a reference potential (e.g. ground) is dependent on the presence, position or approach of objects in the observation area. An evaluation circuit coupled to the sensor electrode detects a phase shift of the capacitance of the condenser system. An LC network is coupled to the capacitor system, and an oscillator connected to the electrode applies a frequency to the system formed by including the electrode and the LC network at a frequency within the range of a parallel resonance frequency of the LC network. In a typical application, the circuit is, for example, installed in a sensor in a handle of a vehicle door in connection with a keyless access function. It may also be used for monitoring danger zones, such as motion gap at window, convertible top, door, or trunk lid systems. The reference fails to recite any particular low-power feature.

US 3,503,007 A discloses an oscillator circuit for the use as a contactless proximity switch. The oscillator comprises a tapped tank circuit. A transistor oscillator is connected to said tank circuit and an adjustable resistor is connected between a tap on the tank circuit and ground to arbitrarily preset the onset of the oscillations which is turned off by the approach of an external damping member. A coupling capacitor couples the tank circuit to a transistor input of the transistor oscillator. A flip-flop circuit is further provided to insure stable turned-off and turned-on conditions of the oscillator circuit.

US 2020/085084 A1 discloses a thermal increase system, such as a defrosting system, that includes a cavity, a first electrode disposed in the cavity, a second electrode disposed in the cavity, and a self-oscillator circuit that produces a radio frequency signal that is converted into electromagnetic energy that is radiated into the cavity by the first and second electrodes. The self-oscillating circuit includes the first electrode and the second electrode. In an embodiment, the first electrode is a first plate in a capacitor structure and the second electrode is a second plate in the capacitor structure. The cavity and a load contained within the cavity operates as a capacitor dielectric of the capacitor structure. A resonant frequency of the self-oscillator circuit is at least partially determined by a capacitance value of the capacitor structure. The system is configured to be used in household appliances such as a refrigerator.

### SUMMARY

The invention is defined by claim 1. Preferred embodiments are recited in the dependent claims. Below, the techniques disclosed herein are directed to devices, circuits, systems and methods for facial movement detection with low-power efficiency and reduced power supply requirements by employing a novel architectural scheme.

In various examples, the techniques disclosed herein provide low power, efficient systems, devices, and circuits that detect facial movements of a user of a Mixed Reality (MR) device. An example battery operated system includes a pulse driver that generates pulse signals at a set frequency, while operated below the battery voltage. An LC filter receives the pulse signals and generates a transient response based on a capacitance value associated with an antenna. The capacitance of the antenna varies responsive to facial movements of the user based on the varying distance of the antenna to the user's skin. A coupling capacitor AC couples the output of the LC filter to other system components, where the AC coupled output of the LC filter includes a detected signal amplitude and a detected signal phase of the LC filter responsive to facial movements of the user.

The described embodiments may be implemented as devices, circuits, and systems, which may include software. This Summary is provided to introduce a selection of concepts in a simplified form that are further described below

This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

The Detailed Description is described with reference to the accompanying figures. References made to individual items of a plurality of items can use a reference number with a letter of a sequence of letters to refer to each individual item. Generic references to the items may use the specific reference number without the sequence of letters.
FIG. 1 shows an illustrative schematic of an RF facial movement detection system;
FIG. 2 shows an illustrative schematic of a low power efficient RF facial movement detection system;
FIG. 3 shows an illustrative schematic of a first example pulse driver and LC resonance circuit for an example low power efficiency RF facial movement detection system;
FIG. 4 shows an illustrative schematic of a second example pulse driver and LC resonance circuit for an example low power efficiency RF facial movement detection system;
FIG. 5 shows an illustrative schematic of a third example pulse driver and LC resonance circuit for an example low power efficiency RF facial movement detection system;
FIG. 6 shows a graph of an AC response for an example low power efficiency RF facial movement detection system;
FIG. 7 shows a graph of a collection of AC responses for an example low power efficiency RF facial movement detection system;
FIG. 8 shows a graph of a transient response for an example low power efficiency RF facial movement detection system; and
FIG. 9 shows a graph of a capacitance variation for a sense antenna of an example low power efficiency RF facial movement detection system.

### DETAILED DESCRIPTION

In the following detailed description, reference is made to the accompanied drawings, which form a part hereof, and which is shown by way of illustration, specific example configurations of which the concepts can be practiced. These configurations are described in sufficient detail to enable those skilled in the art to practice the techniques disclosed herein, and it is to be understood that other configurations can be utilized, and other changes may be made. The following detailed description is, therefore, not to be taken in a limiting sense.

Throughout the specification and claims, the following terms take the meanings explicitly associated herein, unless the context clearly dictates otherwise. The meaning of "a," "an," and "the" includes plural reference, the meaning of "in" includes "in" and "on." The term "connected" means a direct electrical connection between the items connected, without any intermediate devices. The term "coupled" means a direct electrical connection between the items connected, or an indirect connection through one or more passive or active intermediary devices and/or components. The terms "circuit" and "component" means either a single component or a multiplicity of components, either active and/or passive, that are coupled to provide a desired function. The term "signal" means at least a power, current, voltage, or data signal. Based upon context, the term "coupled" may refer to a wave or field coupling effect, which may relate to a corresponding magnetic field, electrical field, or a combined electromagnetic field.

The proposed technologies describe a low power efficient RF facial movement detection scheme, that is suitable for use in portable systems that operate on battery power. A DC-AC converter can be utilized to convert the DC power provided by the battery to AC Power. The DC-AC converter may be configured to generate the AC power having a peak voltage that corresponds to at an intermediate level being between the DC voltage of the battery (e.g., V_{BAT}), and the peak AC voltage (e.g., V_{PEAK}) generated by the pulse driver in the system. The proposed systems also include an LC filter (or resonator) with a high quality factor (or Q), where the LC filter uses a series inductor circuit in conjunction with a sense capacitor that is formed by a sense antenna and facial skin from the user. The LC filter is configured to amplify the AC voltage of the AC power at a resonant frequency of the RF face tracking system.

An important aspect of the proposed scheme is that the face tracking system benefits from improved power efficiency. The power inverter design can be integrated in an ASIC with the processing circuit units, which operates on battery power and does not require high voltage power supplies. In terms of the area and power efficiency, there should be huge benefits as will be described herein. The input amplitude of DC-AC converter can be adjusted with the target AC signal amplitude from the system.

The resonance frequency of the LC filter will change with variations in the sense capacitor from the antenna, which changes responsive to facial movement relative to the location of the antenna. For a given fixed input frequency, the gain and phase of the output signals from the LC filter will change with sensed capacitance variations. Very large output signals (e.g., in a range of about 20Vp-p to about 50Vp-p) can be achieved with a relatively small input signals (e.g., in a range of about 1Vp-p to about 5Vp-p) due to the peak gain and high Q at the resonant frequency of the LC filter.

Given the large output signals that may be achieved from the LC filter as described above, the requirements for other components of the system may be relaxed. For example, a high bandwidth operational amplifier is a system component that is often used as a sense amplifier for the output of a filter circuit. Such high bandwidth operational amplifiers would be required to operate with power supply voltages in the range of about 20V to about 50V to match the required output levels needed for high resolution. Additionally, the operational amplifier would consume standby current on the order of milli-amperes even when no signal is present, consuming valuable power in a battery powered portable device. However, in the presently disclosed systems, such high bandwidth operational amplifiers may be eliminated, reducing circuit complexity, reducing power supply requirements, and reducing power consumption. Additional system components (e.g., the ADC, MCU, processor, etc.) may achieve further benefits from the reduced circuit complexity, reduced power supply requirements, and reduced power consumption.

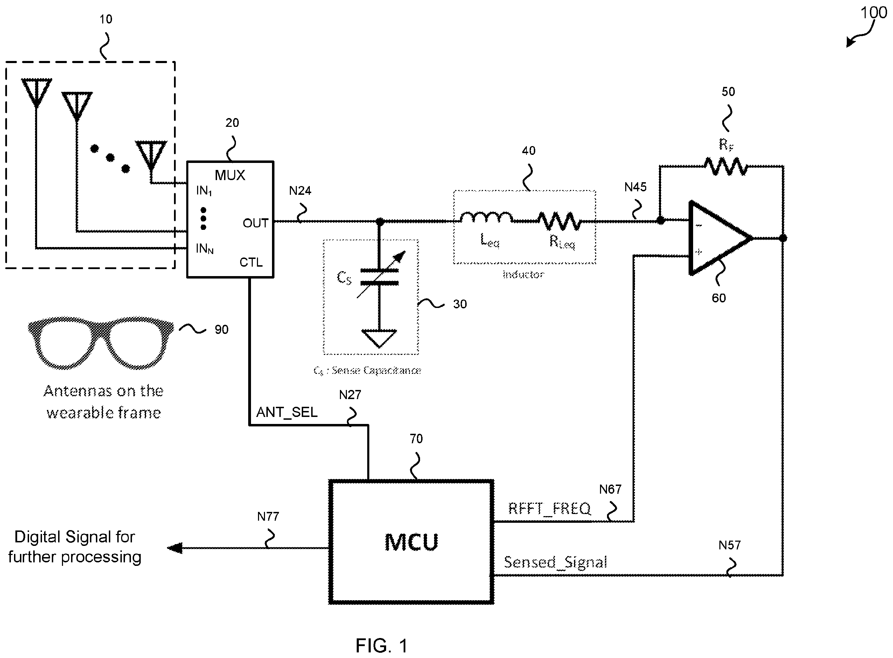

FIG. 1 shows an illustrative schematic of an RF facial movement detection system 100 useful for understanding the invention. As illustrated, system 100 includes antennas 10, a multiplexer (MUX) 20, a sense capacitor 30, an inductor circuit 40, a feedback resistor 50, an operational amplifier 60, and a microcontroller unit (MCU) 70. The antennas 10 may be positioned about various locations of a wearable MR headset, such as a wearable frame 90.

Multiplexer (MUX) 20 includes a set of input ports (IN₁ to IN_{N}), an output port (OUT), and a control port (CTL). Each of the input ports (IN₁ to IN_{N}) is connected to a corresponding one of the antennas 10. The output port (OUT) of MUX 20 is coupled to node N24. The control port (CTL) of MUX 20 will selectively couple one of the input ports to the output port, based on an antenna selection signal (e.g., ANT_SEL) from node N27, which is provided by the MCU 70.

The sense capacitor 30 is illustrated as a capacitor with a variable capacitance value (C_{S}) that is coupled between node N24 and a ground terminal (e.g., GND). Although shown as a physical capacitor component, sense capacitor 30 corresponds to the characteristic capacitance of the currently selected antenna from the MUX 20. Since the antennas are physically located on a wearable frame 90, the actual capacitance value (C_{S}) of the antenna will vary based on proximity to the skin of the user. The inductor circuit 40 includes an inductor (Leq) that is coupled in series between node N24 and node N45, with a characteristic resistance of the inductor represented as a series connected resistor (Req). Since node N24 corresponds to the output of MUX 20, the currently selected one of the antennas 10 is effectively coupled to the inductor circuit 40. From node N45 looking through the inductor circuit 40 towards the sense capacitance, an LC filter circuit may be identified.

A feedback resistor 50 is connected between node N45 and node N57, and has a value given as R_{F}. Operational amplifier 60 includes an inverting input (-) which is connected to node N45, a non-inverting input (+) that is connected to node N67, and an output that is connected to node N57. Thus, the feedback resistor 50 is arranged in the feedback loop between the output and inverting input (-) of the operational amplifier 60.

The microcontroller unit (MCU) 70 has an input at node N57, and provides outputs at nodes N27, N67, and N77. The MCU can be configured via software or firmware instructions to control the operation of the circuit 100 according to a time-division multiplexing scheme. First, one of the antennas 10 is selectively coupled to node N24 by MCU 70, responsive to the antenna select signal (ANT_SEL) at node N27. Second, the operational amplifier is driven by an alternating signal (e.g., RFFT_FREQ) such as a sine wave that may be provide by the MCU 70 at node N67. While the alternating signal is presented to the non-inverting input (+) of operational amplifier 60, the operational amplifier will drive its output until the non-inventing input (+) and the inverting input (+) are equalized. Thus, the alternating signal will be effectively driven into the LC filter at Node N45 by the operational amplifier 60.

Based on the high Q resonance characteristics of the LC filter, the output of the operational amplifier 60 at node N57 will correspond to a sense signal (e.g., SENSED_SIGNAL), which is provided to the MCU 70. MCU 70 captures the sensed signal from node N57 (e.g., via an Analog-to-Digital Converter, or ADC) which is then provided as a digital signal at node N77 and to other systems for further processing (e.g., processing to determine facial expression, movement, etc.).

The sensed signal may have a significantly high peak to peak voltage due to the high Q nature of the LC filter. Thus, the operational amplifier 60 must have enough headroom (e.g., high power supply voltages can be required) to handle the output signals of the LC filter. Additionally, the transient response of the operational amplifier must be significantly fast enough to stabilize the output within all the timing requirements, which equates to a high gain-bandwidth product and a significant standby current on the order of milliamperes. All in all, the operational amplifier 60 has very specific technical requirements which leads to an increased cost (both the cost of the component itself, as well as the power/bandwidth system implementation costs) to achieve satisfactory performance. The present disclosure evaluated these and other possible implementations and has identified the shortcomings to identify a new approach as will be described below.

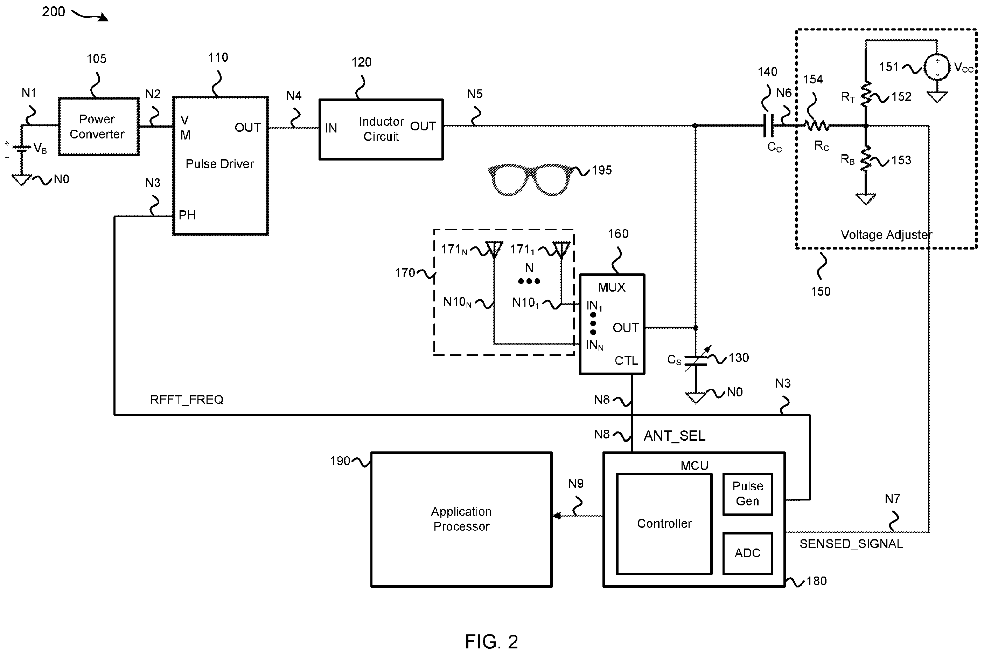

FIG. 2 shows an illustrative schematic of a low power efficient RF facial movement detection system 200 according to the claimed invention. As illustrated, system 200 includes a power converter 105, a pulse driver 110, an inductor circuit 120, a sense capacitor 130, a coupling capacitor 140, a voltage adjuster 150, a multiplexer (MUX) 160, antennas 170, a microcontroller unit (MCU) 180, and an application processor 190. The antennas 170 may be positioned about various locations of a wearable MR headset, such as a wearable frame 195.

The power converter 105 has an input port that is coupled to node N1, which corresponds to a battery supply voltage (V_{B}), and an output port at node N2. The pulse driver 110 includes a first input port (VM) which is coupled to node N2, a second input port (PH) which is coupled to node N3, and an output port (OUT) that is coupled to node N4. The inductor circuit 120 includes a first port (IN) that is coupled to node N4, and a second port (OUT) that is coupled to node N5. The sense capacitor 130 is coupled between node N5 and node N0. The coupling capacitor 140 is coupled between node N5 and node N6. The voltage adjuster 150 includes a first port that is coupled to node N6 and a second port that is coupled to node N7. The MUX 160 includes input ports IN₁ to IN_{N}, each coupled to a respective one of nodes N10₁ to N10_{N}, an output port (OUT) that is coupled to node N5, and a control port (CTL) that is coupled to node N8. The MCU 180 includes a first output port that is coupled to node N3, an input port that is coupled to node N7, a second output port that is coupled to node N8, and a third output port that is coupled to node N9. The power converter 105 is configured to convert the voltage from node N1 to another appropriate voltage at node N2, which provides the supply voltage to the pulse driver 110. In various examples, the supply voltage used by the pulse driver 110 at node N2 will be lower than the battery voltage (VB) from node N1. For example, in a simple implementation, the power converter 105 can simply be implemented as a voltage divider that generates a voltage at node N2 as fraction of the original battery supply voltage at node N1. In another example, the power converter 105 can be implemented similar to a digital-to-analog converter (DAC), with a resistor divider circuit that includes multiple tap points for various voltages that are selected from a digital control signal from the MCU (not shown).

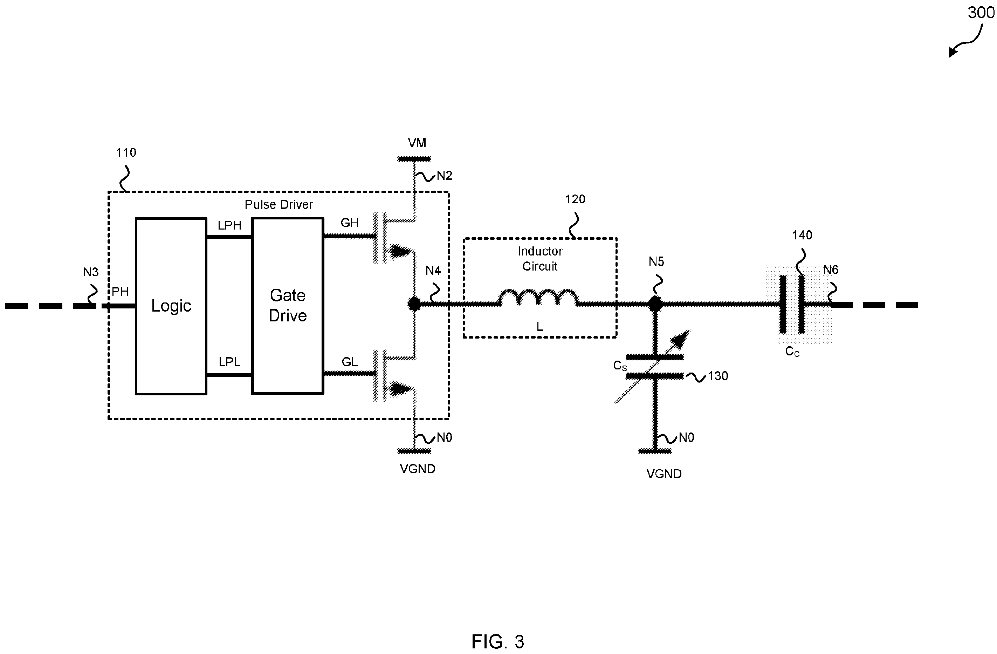

The pulse driver 110 is configured to generate one or more pulse signals that are used by an LC filter in a DC-AC converter topology. The maximum magnitude of the pulse signals is determined by the voltage (VM) at node N2, and the frequency of the pulse signals is determined by a periodic signal (e.g., a clock or pulse signal, RFFT_FREQ) from the MCU at node N3. For example, a series of pulses from the pulse driver 110 are received by the LC filter, which is excited by the pulses and resonates at a characteristic resonant frequency. Example pulse driver topologies will be further described with reference to FIGS. 3 - 5.

Multiplexer (MUX) 160 is configured to selectively couple one of the input ports (IN₁ to IN_{N}) to the output port (OUT), based on an antenna selection signal (e.g., ANT_SEL) from node N8, which is provided by the MCU 180. The sense capacitor 130 is illustrated as a capacitor with a variable capacitance value (C_{S}) that is coupled between node N5 and node N0 (e.g., GND or VSS). Although shown as a physical capacitor component, the sense capacitor 130 corresponds to the characteristic capacitance of the currently selected antenna from the MUX 160.

Since the antennas 170 are physically located on a wearable frame 190, the actual capacitance value (C_{S}) of the antenna will vary based on proximity to the skin of the user. The inductor circuit 120 has a characteristic inductance value (Leq) that is coupled in series between node N4 and node N5. Since node N4 corresponds to the output of MUX 160, the currently selected one of the antennas 170 is effectively coupled to the inductor circuit 120. From node N4 looking through the inductor circuit 120 towards the sense capacitor 130, an LC filter circuit may be identified. Thus, the sense capacitor 130 and the inductor circuit 140 together form the LC filter that is used by the pulse driver 110 in the DC-AC converter topology.

In some examples, the sense capacitors from the antennas 170 will have values in a range of about 150pF to about 250pF, with nominal values on the order of about 200pF. In other examples, the inductor circuits 120 may have an effective inductance value in a range of about 1400uH to about 3000uH, with nominal values on the order of about 2200uH.

Coupling capacitor 140 is an AC coupling capacitor that provides DC isolation between the LC filter and the voltage adjuster 150. In some examples, the value of the coupling capacitor 140 will be in a range of about 0.1nF to about 1nF, with nominal values on the order of about 0.5nF, so as to not significantly impact the LC filter response. The AC response to the pulses driven into the LC filter will result in a hi Q resonance response that has a significant high voltage (e.g., about 10Vp-p to about 50Vp-p), without the use of any additional amplifiers.

The voltage adjuster 150 is configured to adjust the DC level of the AC coupled output signal from the LC filter at node N6 (via coupling capacitor 140), and also apply a scaling factor to the signal. The objective of the voltage adjuster is to maximize the conversion efficiency and resolution of an analog-to-digital converter (ADC) in the MCU 180.

In some examples as illustrated, the voltage adjuster 150 may include a voltage source 151, resistors 152, 153 and 154. Voltage source 151 provides a DC supply voltage, VCC or a high-side DC supply voltage, to the series combination of resistors 152 and 153. Resistor 152 is coupled between the output of the voltage source 151 (e.g., a high-side DC supply voltage at a DC supply node) and node N7. Resistor 153 is coupled between the node N7 and a node N0 (VSS, VGND, which may be a ground or a low-side DC supply voltage). Resistor 152 corresponds to the top resistor, RT, while resistor 153 corresponds to the bottom resistor RB. When RT = RB, the DC voltage at node N7 will be VCC/2. Example resistance values for resistors 152 and 153 are in a range of about 10K ohms to about 30K ohms, and nominally about 20K ohms. Resistor 154 is series coupled between node N6 and N7 and operates as part of the voltage scaler for the AC component of the signal from node N6, which can reduce the signal amplitude to match the headroom of the ADC located in the MCU 180. Example resistance values for resistor 154 are in a range from about 50K ohms to about 150K ohms, with nominal values of about 100K ohms.

The proposed system illustrated in FIG. 2 employs a DC-AC converter topology that converts the DC power provided by the battery to AC power. The DC-AC converter may generate the AC power having a peak voltage that is at an intermediate level between the DC voltage of the battery, and the peak AC voltage generated by the system. The system includes a Q-controlled filter that uses a series inductance circuit as described above. In various examples, the inductance circuit can be implemented as a conventional inductor, a pair of inductively (or magnetically) coupled mutual inductors, or as a cross-coupled pair of mutual inductors.

Examples pulse drivers with different arrangements of LC filters will now be described with reference to FIGS. 3-5. Like components are labelled the same as in FIG. 2, and the same discussions apply to these example implementations which are according to the claimed invention. FIG. 3 shows an illustrative schematic of a first example pulse driver and LC resonance circuit for an example low power efficiency RF facial movement detection system 300. As illustrated, the pulse driver 110 is implemented as a half-bridge driver with a pair of FETS, a logic block, and a gate drive block. The inductor circuit 120 is illustrated as a simple inductor, and the sense capacitor 130 and the coupling capacitor 140 are illustrated as in FIG. 2.

A first of the FETS includes a gate that is selectively activated by a first gate drive signal, GH, a drain that is coupled to the high-side supply at node N2 (e.g., VM), and a source that is coupled to node N4. When activated by the first gate drive signal GH, the first FET effectively couples power from node N2 to node N4 resulting in the LC circuit charging to the high-side supply voltage (VM). A second of the FETS includes a gate that is selectively activated by a second gate drive, GL, a drain that is coupled to node N4, and a source that is coupled to the low-side supply at node N0 (e.g., VGND). When activated by the second gate drive signal GL, the second FET effectively couples node N4 to node N0, reversing the direction of conduction as the LC circuit is discharged to the low-side supply (e.g., VGND, VSS, etc.) at node N0.

The logic block is configured to receive the input frequency signal from the MCU at node N3, while generating high and low side switch control signals LPH and LPL. The gate drive block is configured to provide the first and second gate drive signals GH and GL, responsive the switch control signals LPH and LPL, with sufficient speed so that the first FET and the second FET are not active at the same time, preventing significant switching or shoot-through currents.

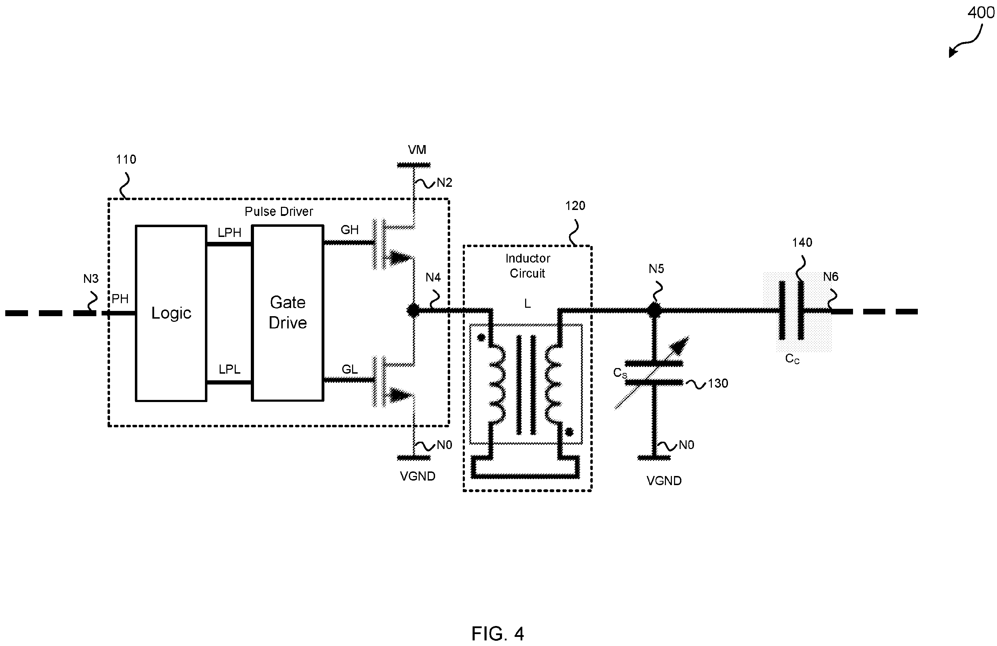

FIG. 4 shows an illustrative schematic of a second example pulse driver and LC resonance circuit for an example low power efficiency RF facial movement detection system 400. As illustrated, the pulse driver 110 is again implemented as a half bridge driver with a pair of FETS, a logic block, and a gate drive block. As illustrated, a first inductor (or inductive coil) is coupled between node N4 and a common node with a polarity designated by the dotted end at node N4, and a second inductor (or inductive coil) is coupled between node the common node and node N5, with a polarity designated by the dotted end at the common node. The inductor circuit 120 for system 400 is illustrated as a cross-coupled pair of mutual inductors, where the mutual inductance of the cross-coupled inductors is effective to increase the effective inductance value (Leff) of the inductor circuit 120.

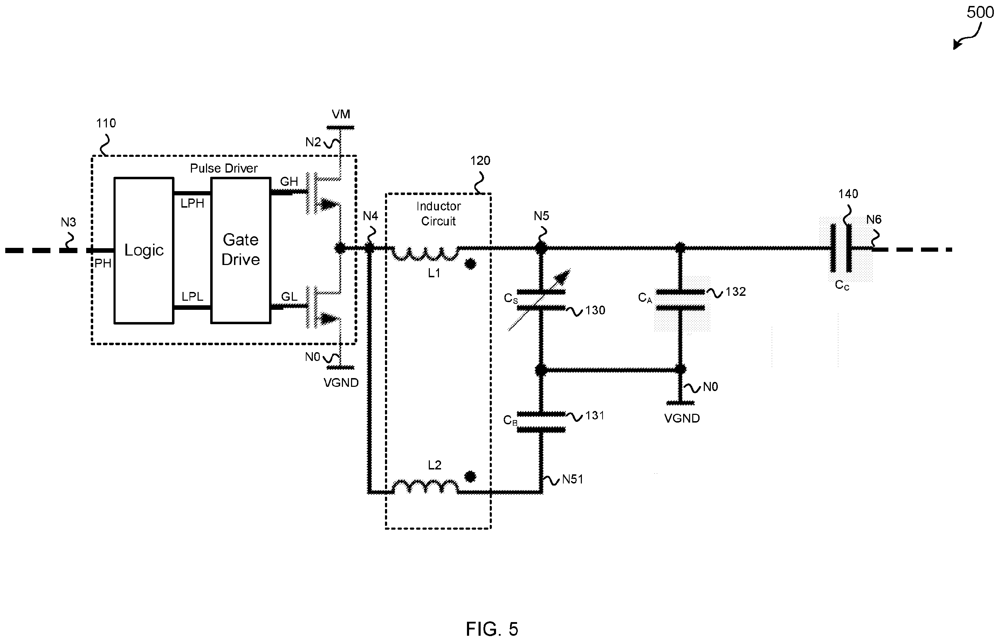

FIG. 5 shows an illustrative schematic of a third example pulse driver and LC resonance circuit for an example low power efficiency RF facial movement detection system 500. As illustrated, the pulse driver 110 is again implemented as an half bridge driver with a pair of FETS, a logic block, and a gate drive block. The inductor circuit 120 for system 500 is illustrated as a magnetically (or inductively) coupled pair of mutual inductors L1, L2. The sense capacitor 130 and the coupling capacitor 140 are again shown, but with the addition of two more capacitors 131, 132.

A first inductor, L1, is coupled between node N4 to node N5, with a polarity designated by the dotted end at node N5. A second inductor, L2, is coupled between node N4 and node N51 (an intermediate node), with a polarity designated by the dotted end at node N51. Inductors L1 and L2 are magnetically (inductively) coupled, as shown by the polarity dots on the symbols. The sense capacitor 130 is again coupled between node N5 and node N0. However, an additional pair of capacitors 131 and 132 are also shown. Capacitor 131 is coupled between node N51 and node N0, while capacitor 132 is coupled between node N5 and node N0. The arrangement of this circuit facilitates better noise immunity and common mode noise rejection by coupling one conductor of the antenna (e.g., the center conductor) to node N5, and the other conductor of the antenna (e.g., the shield conductor) to node N51. Capacitors 131 and 132 may be, in some examples, substantially the same in value (e.g., about 200pF), with the variable portion of the capacitance remaining as sense capacitor 130.

The example half bridge drivers illustrated in FIGS. 3-5 are illustrated as including N-type FETS for the first FET and the second FET. However, the specific implementations are not so limited, and other implementations may include P-type FETS, or combinations of N-type and P-type FETS. Additionally, the logic block and gate drive blocks may be arranged to provide non-overlapping switched operation of N-type FETS, P-type FETS, or any combinations thereof.

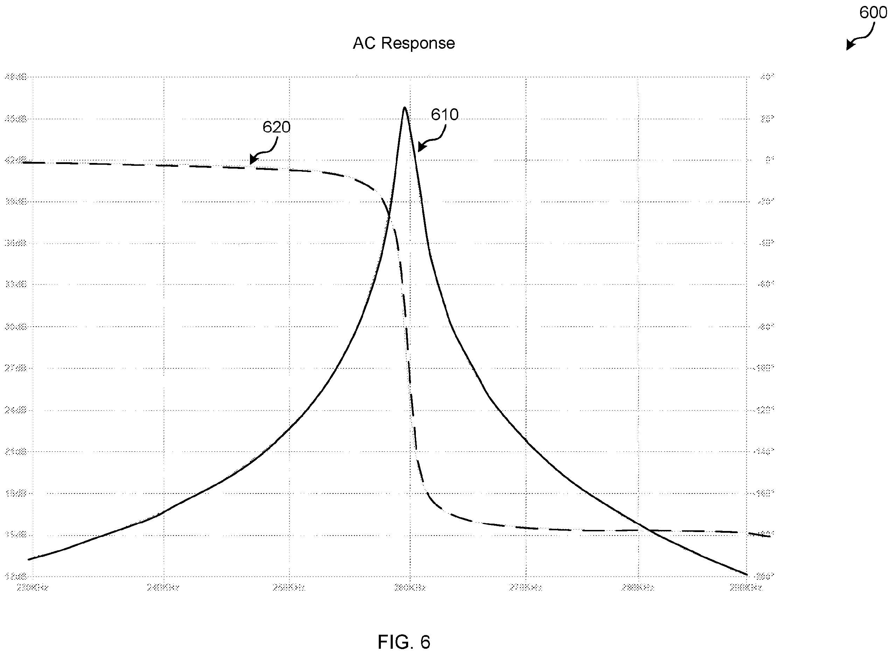

FIG. 6 shows a graph 600 of an AC response for an example low power efficiency RF facial movement detection system. A high Q filter is results from the capacitance that is formed by the sensor antenna and the facial skin of the user, and the inductor circuit, which results in an amplification of the AC voltage and AC power at the LC resonant frequency of the RF face tracking system. As illustrated, a magnitude 610 of the AC response has a significant peak at around 258KHZ of around 46dB of gain. A phase 620 of the AC response is at 0 deg from about 230KHZ to about 255KHZ, with a sharp phase shift to -180 deg occurring between 255KHZ and 265KHz. The magnitude and phase can be captured by the MCU for each antenna, and then further processed by an application to identify facial movements and facial expressions.

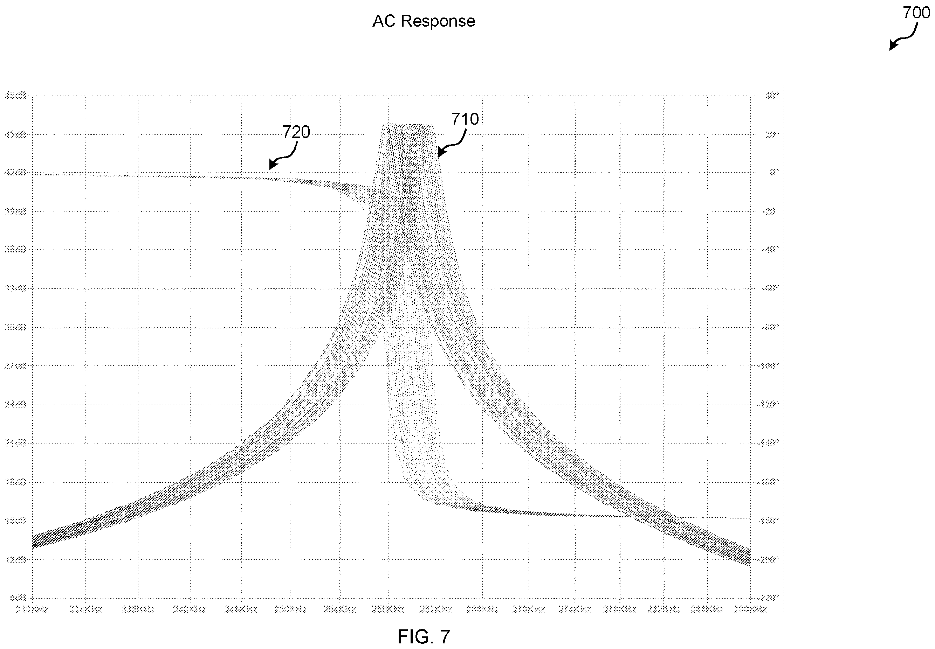

FIG. 7 shows a graph 700 of a collection of AC responses for an example low power efficiency RF facial movement detection system. Multiple phase and magnitude responses are overlayed to demonstrate variations in resonant frequency resulting from facial movements. The resonance frequency shifts with sense capacitance variations. Therefore, the gain and phase at the output of the LC filter at a fixed input frequency will be changed with sense capacitance variations. Magnitude of the AC response can thus indicate a change in distance between the antenna and the skin, while phase will give an indication of direction of movement.

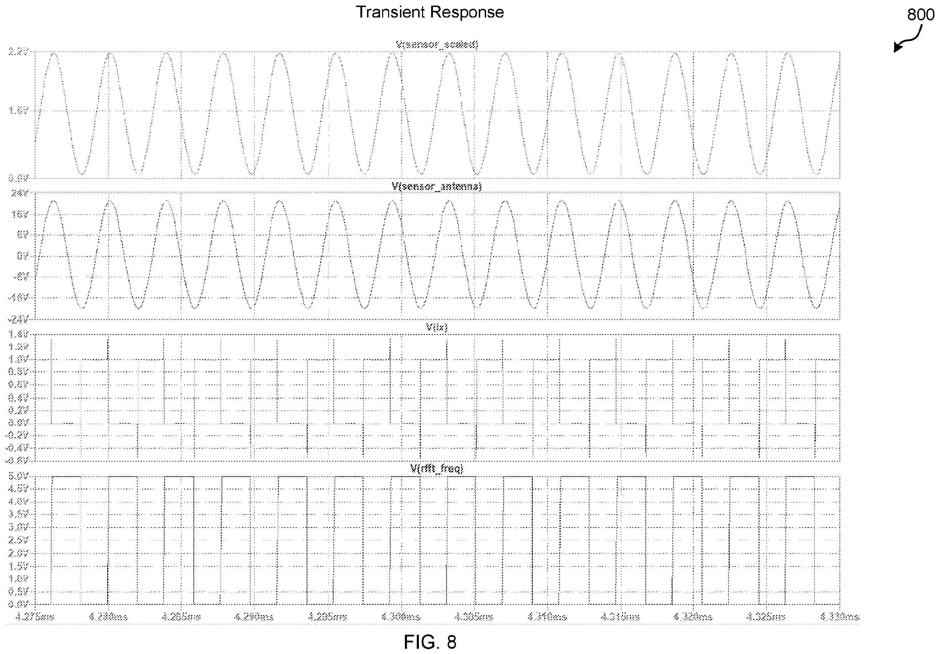

FIG. 8 shows a graph 800 of a transient response for an example low power efficiency RF facial movement detection system. As illustrated, an input signal V(rfft_freq) is provided by the MCU 180 to the pulse driver 110 (e.g., at node N3) as a 5V clock signal with a frequency of about 259KHZ. The voltage output by the LC filter (e.g., at node N5), which is directly impacted by the sense capacitance from the antenna, is illustrated as an AC signal, V(sensor_antenna), with an amplitude of about 40V peak-to-peak (+/-20V). The output of the voltage adjuster 150 (e.g., at node N7) yields a scaled AC signal, V(sensor_scaled), which has a DC level of about 1.6V, and a peak-to-peak voltage swing of about 1.2V about the DC level. The output of the pulse driver (e.g., at node N4) is also shown as V(Ix), which shows a voltage swing of about 1V, nominally.

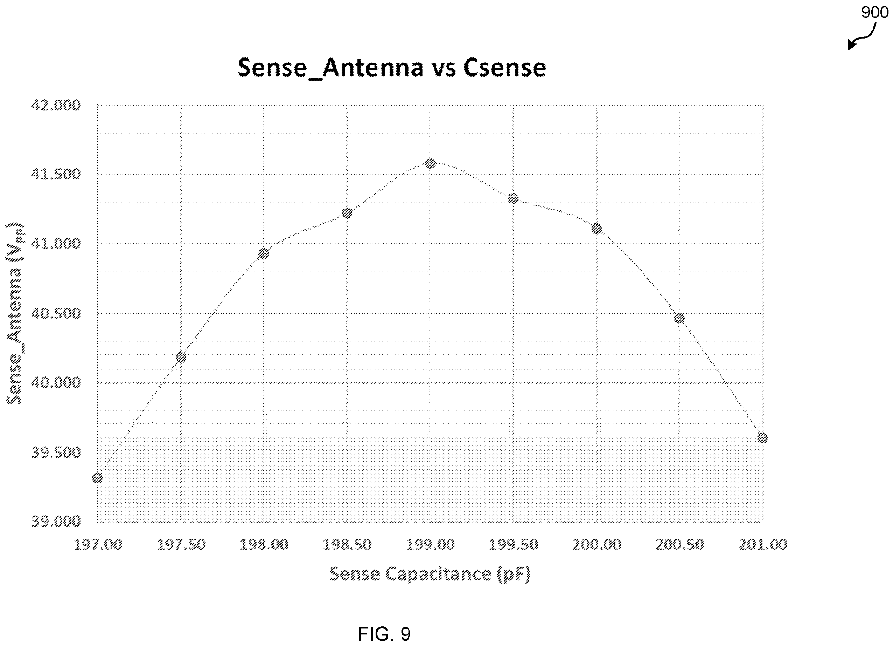

FIG. 9 shows a graph 900 of capacitance variations for a sense antenna of an example low power efficiency RF facial movement detection system. As illustrated the amplitude of the sensed signal changes with the value of the sense capacitor 130. For example, a capacitance of 199pF yields a signal amplitude of about 31.6Vpp, while a capacitance of 197pF yields a signal amplitude of about 39.3Vpp and a capacitance of 201pF yields a signal amplitude of about 39.36Vpp. Thus, as facial movement occurs the capacitance values vary based on the change in distances, yielding a different capacitance value.

The most highlighted aspect of the proposed scheme is power efficient benefit. Additionally, since the DC-AC inverter design can operate on battery voltages without high-power supply voltages, the functions can be integrated into an ASIC with the processing circuit units. Manufacturing and assembly costs can be reduced, and beneficially achieve improved power efficiency with a reduced overall footprint on circuit area.

The proposed solution described herein can eliminate high power supply requirements, while also eliminating the need for additional operational amplifiers that requires wide gain-bandwidth products to avoid any signal distortion. Thus, the proposed scheme can achieve a simplified circuit design with simplified power supply requirements, and elimination of costly components. Low power consumption may also be achieved, while also simplifying the design requirements for the Analog-to Digital Converter (ADC), which can also have reduced power requirements. Consequently, battery life may be prolonged and user enjoyment will be enhanced by increased functionality and longer battery life. Signal quality is maintained while the power supply requirements are relaxed, making a robust and reliable solution that eliminates the most power-hungry functional blocks.

It will be understood that the configurations and/or approaches described herein are exemplary in nature, and that these specific embodiments or examples are not to be considered in a limiting sense, because numerous variations are possible. The specific circuits, devices and systems described herein may represent one or more of any number of strategies. As such, various system and/or circuit components may be broken into additional functions or circuits, and/or combined with other functions or circuits as may be desirable in a specific implementation.

The subject matter of the present disclosure includes all novel and non-obvious combinations and sub-combinations of the various processes, circuits, devices, systems and configurations, and other features, functions and/or properties disclosed herein.

## Claims

1. A battery operated Mixed Reality, MR, device (200, 300, 400, 500) to sense facial movements of a user, the device comprising:
a pulse driver (110) that generates one or more pulse signals at a first node (N4) responsive to an input frequency signal (RFFT_FREQ), wherein the pulse driver (110) operates on a reduced voltage that is lower than the battery voltage;
an LC filter that includes:
an inductor circuit (120) that is coupled between the first node (N4) and a second node (N5);
a sense capacitor (130) that is coupled between the second node (N5) and a third node (N0), wherein a capacitance value of the sense capacitor (130) varies responsive to the facial movements of the user such that a characteristic resonance of the LC filter varies responsive to the facial movements; and
a coupling capacitor (140) that is coupled between the second node (N5) and a fourth node (N6), wherein the fourth node (N6) corresponds to an AC coupled output of the LC filter that includes a detected signal amplitude and a detected signal phase of the LC filter responsive to facial movements of the user.

2. The device of claim 1, further comprising a power converter (105) that is configured to convert the battery voltage to the reduced voltage, wherein the power converter (105) comprises one or more of a voltage divider circuit and a digital-to-analog converter circuit.

3. The device of claim 1, further comprising a voltage adjuster (150) that receives the AC coupled output from the fourth node (N6) and generates a scaled AC output at a fifth node (N7).

4. The device of claim 3, wherein the voltage adjuster (150) is configured to adjust one or more of: a DC offset for the scaled AC output, and a voltage magnitude adjustment for the scaled AC output.

5. The device of claim 1, the inductor circuit (120) further comprising one of an inductor, a magnetically coupled pair of mutual inductors, and a cross-coupled pair of mutual inductors.

6. The device of claim 2 including a wearable frame,
wherein the amplitude of the pulse signals at the first node (N4) is below the reduced voltage and the frequency of the pulse signals is determined by the input frequency signal (RFFT_FREQ), and
wherein the inductor circuit has a characteristic inductance and the device further comprises:
a plurality of antennas (170), each positioned about different location of the wearable frame (195), each of the plurality of antennas (170) having a characteristic sense capacitance that varies based on distance between the corresponding one of the plurality of antennas (170) and skin of the user; and
a multiplexer (160) that is configured to selectively couple one of the plurality of antennas (170) to the second node (N5) in response to a control signal, wherein the sense capacitor corresponds to the characteristic sense capacitance of the selected one of the plurality of antennas (170) and the LC filter is formed by the characteristic inductance of the inductor circuit (120) and the characteristic sense capacitance of the selected one of the plurality of antennas.

7. The device of claim 1 including a wearable frame,
wherein the pulse driver (110) receives the reduced voltage as a high-side supply voltage from a sixth node (N2), receives the input frequency signal (RFFT_FREQ) from a seventh node (N3), generates the one or more pulse signals at the first node (N4) and includes:
a logic block that generates a high side switch control signal and a low side switch control signal responsive to the input frequency signal (RFFT_FREQ) from the seventh node (N3);
a gate drive block that provides a first gate drive signal responsive to the high side switch control signal, a second gate drive signal responsive to the low side switch control signal;
a first FET that is selectively activated responsive to the first gate drive signal to couple the sixth node (N2) to the first node (N4); and
a second FET that is selectively activated responsive to the second gate drive signal to couple the first node (N4) to a low-side supply node;
wherein the inductor circuit has a characteristic inductance, and
wherein the sense capacitor (130) is coupled between the second node (N5) and the third node (N0) being the low-side supply node.

8. The device of claim 7, wherein the first FET and the second FET are both N-type FETs, both P-type FETs, or comprise a combination of N-type and P-type FETs.

9. The device of claim 8, wherein the logic block and gate drive block are arranged to provide non-overlapping switched operation of the first FET and the second FET.

10. The device of claim 7, wherein the inductor circuit (120) comprises a cross-coupled pair of mutual inductors with a first inductor and a second inductor, wherein the first inductor is coupled between the first node (N4) and a common node with a polarity designated at the first node (N4), and wherein the second inductor is coupled between the common node and the second node (N5) with a polarity designated at the common node.

11. The device of claim 7, further comprising: a first additional capacitor (132) and a second additional capacitor (131), wherein:
the first additional capacitor (132) is coupled between the second node (N5) and the low-side supply node;
the second additional capacitor (131) is coupled between the low-side supply node and an intermediate node (N51); and
the inductor circuit (120) further comprises a magnetically coupled pair of mutual inductors with a first inductor (L1) and a second inductor (L2), where the first inductor (L1) is coupled between the first node (N4) and the second node (N5) with a polarity designated at the second node (N5), and the second inductor (L2) is coupled between the first node (N4) and the intermediate node (N51) with a polarity designated at the intermediate node (N51).

## Patentansprüche

1. Batteriebetriebene Mixed Reality-, MR-, Vorrichtung (200, 300, 400, 500) zum Erfassen von Gesichtsbewegungen eines Benutzers, wobei die Vorrichtung Folgendes umfasst:
einen Impulstreiber (110), der ein oder mehrere Impulssignale an einem ersten Knoten (N4) als Reaktion auf ein Eingangsfrequenzsignal (RFFT_FREQ) erzeugt, wobei der Impulstreiber (110) mit einer reduzierten Spannung arbeitet, die niedriger als die Batteriespannung ist;
einen LC-Filter, der Folgendes aufweist:
eine Induktorschaltung (120), die zwischen dem ersten Knoten (N4) und einem zweiten Knoten (N5) gekoppelt ist;
einen Erfassungskondensator (130), der zwischen dem zweiten Knoten (N5) und einem dritten Knoten (N0) gekoppelt ist, wobei ein Kapazitätswert des Erfassungskondensators (130) als Reaktion auf die Gesichtsbewegungen des Benutzers variiert, sodass eine charakteristische Resonanz des LC-Filters als Reaktion auf die Gesichtsbewegungen variiert; und
einen Kopplungskondensator (140), der zwischen dem zweiten Knoten (N5) und einem vierten Knoten (N6) gekoppelt ist, wobei der vierte Knoten (N6) einem AC-gekoppelten Ausgang des LC-Filters entspricht, der eine erfasste Signalamplitude und eine erfasste Signalphase des LC-Filters als Reaktion auf Gesichtsbewegungen des Benutzers aufweist.

2. Vorrichtung nach Anspruch 1, ferner umfassend einen Leistungswandler (105), der eingerichtet ist, die Batteriespannung in die reduzierte Spannung umzuwandeln, wobei der Leistungswandler (105) eines oder mehrere von einer Spannungsteilerschaltung und einer Digital-Analog-Wandlerschaltung umfasst.

3. Vorrichtung nach Anspruch 1, ferner umfassend einen Spannungseinsteller (150), der den AC-gekoppelten Ausgang von dem vierten Knoten (N6) empfängt und einen skalierten AC-Ausgang an einem fünften Knoten (N7) erzeugt.

4. Vorrichtung nach Anspruch 3, wobei der Spannungseinsteller (150) eingerichtet ist, eines oder mehrere von Folgendem einzustellen: einen DC-Offset für den skalierten AC-Ausgang und eine Spannungsgrößeneinstellung für den skalierten AC-Ausgang.

5. Vorrichtung nach Anspruch 1, wobei die Induktorschaltung (120) ferner eines von einem Induktor, einem magnetisch gekoppelten Paar von gegenseitigen Induktoren und einem kreuzgekoppelten Paar von gegenseitigen Induktoren umfasst.

6. Vorrichtung nach Anspruch 2, die einen tragbaren Rahmen aufweist,
wobei die Amplitude der Impulssignale an dem ersten Knoten (N4) unter der reduzierten Spannung liegt und die Frequenz der Impulssignale durch das Eingangsfrequenzsignal (RFFT_FREQ) bestimmt wird, und
wobei die Induktorschaltung eine charakteristische Induktivität aufweist und die Vorrichtung ferner Folgendes umfasst:
eine Mehrzahl von Antennen (170), die jeweils um eine unterschiedliche Stelle des tragbaren Rahmens (195) positioniert sind, wobei jede der Mehrzahl von Antennen (170) eine charakteristische Erfassungskapazität aufweist, die basierend auf dem Abstand zwischen der entsprechenden der Mehrzahl von Antennen (170) und der Haut des Benutzers variiert; und
einen Multiplexer (160), der eingerichtet ist, eine aus der Mehrzahl von Antennen (170) als Reaktion auf ein Steuersignal selektiv an den zweiten Knoten (N5) zu koppeln, wobei der Erfassungskondensator der charakteristischen Erfassungskapazität der ausgewählten aus der Mehrzahl von Antennen (170) entspricht und der LC-Filter durch die charakteristische Induktivität der Induktorschaltung (120) und die charakteristische Erfassungskapazität der ausgewählten der Mehrzahl von Antennen gebildet wird.

7. Vorrichtung nach Anspruch 1, die einen tragbaren Rahmen aufweist,
wobei der Impulstreiber (110) die reduzierte Spannung als eine High-Side-Versorgungsspannung von einem sechsten Knoten (N2) empfängt, das Eingangsfrequenzsignal (RFFT_FREQ) von einem siebten Knoten (N3) empfängt, das eine oder die mehreren Impulssignale an dem ersten Knoten (N4) erzeugt und Folgendes aufweist:
einen Logikblock, der ein High-Side-Schaltersteuersignal und ein Low-Side-Schaltersteuersignal als Reaktion auf das Eingangsfrequenzsignal (RFFT_FREQ) von dem siebten Knoten (N3) erzeugt;
einen Gate-Treiberblock, der ein erstes Gate-Treibersignal als Reaktion auf das High-Side-Schaltersteuersignal und ein zweites Gate-Treibersignal als Reaktion auf das Low-Side-Schaltersteuersignal bereitstellt;
einen ersten FET, der als Reaktion auf das erste Gate-Treibersignal selektiv aktiviert wird, um den sechsten Knoten (N2) mit dem ersten Knoten (N4) zu koppeln; und
einen zweiten FET, der als Reaktion auf das zweite Gate-Treibersignal selektiv aktiviert wird, um den ersten Knoten (N4) mit einem Low-Side-Versorgungsknoten zu koppeln;
wobei die Induktorschaltung eine charakteristische Induktivität aufweist, und
wobei der Erfassungskondensator (130) zwischen dem zweiten Knoten (N5) und dem dritten Knoten (N0) gekoppelt ist, der der Low-Side-Versorgungsknoten ist.

8. Vorrichtung nach Anspruch 7, wobei der erste FET und der zweite FET beide N-Typ-FETs, beide P-Typ-FETs sind oder eine Kombination von N-Typ- und P-Typ-FETs umfassen.

9. Vorrichtung nach Anspruch 8, wobei der Logikblock und der Gate-Treiberblock angeordnet sind, um einen nicht überlappenden geschalteten Betrieb des ersten FET und des zweiten FET bereitzustellen.

10. Vorrichtung nach Anspruch 7, wobei die Induktorschaltung (120) ein kreuzgekoppeltes Paar von gegenseitigen Induktoren mit einem ersten Induktor und einem zweiten Induktor umfasst, wobei der erste Induktor zwischen dem ersten Knoten (N4) und einem gemeinsamen Knoten mit einer Polarität gekoppelt ist, die an dem ersten Knoten (N4) bestimmt ist, und wobei der zweite Induktor zwischen dem gemeinsamen Knoten und dem zweiten Knoten (N5) mit einer Polarität gekoppelt ist, die an dem gemeinsamen Knoten bestimmt ist.

11. Vorrichtung nach Anspruch 7, die ferner Folgendes umfasst: einen ersten zusätzlichen Kondensator (132) und einen zweiten zusätzlichen Kondensator (131), wobei:
der erste zusätzliche Kondensator (132) zwischen dem zweiten Knoten (N5) und dem Low-Side-Versorgungsknoten gekoppelt ist;
der zweite zusätzliche Kondensator (131) zwischen dem Low-Side-Versorgungsknoten und einem Zwischenknoten (N51) gekoppelt ist; und
die Induktorschaltung (120) ferner ein magnetisch gekoppeltes Paar von gegenseitigen Induktoren mit einem ersten Induktor (L1) und einem zweiten Induktor (L2) umfasst, wobei der erste Induktor (L1) zwischen dem ersten Knoten (N4) und dem zweiten Knoten (N5) mit einer Polarität gekoppelt ist, die an dem zweiten Knoten (N5) bestimmt ist, und der zweite Induktor (L2) zwischen dem ersten Knoten (N4) und dem Zwischenknoten (N51) mit einer Polarität gekoppelt ist, die an dem Zwischenknoten (N51) bestimmt ist.

## Revendications

1. Dispositif de réalité mixte, MR, alimenté par batterie (200, 300, 400, 500) pour détecter des mouvements faciaux d'un utilisateur, le dispositif comprenant :
un pilote d'impulsions (110) qui génère un ou plusieurs signaux d'impulsions au niveau d'un premier noeud (N4) en réponse à un signal de fréquence d'entrée (RFFT_FREQ), dans lequel le pilote d'impulsions (110) fonctionne sur une tension réduite qui est inférieure à la tension de batterie ;
un filtre LC qui inclut :
un circuit inducteur (120) qui est couplé entre le premier noeud (N4) et un deuxième noeud (N5) ;
un condensateur de détection (130) qui est couplé entre le deuxième noeud (N5) et un troisième noeud (N0), dans lequel une valeur de capacité du condensateur de détection (130) varie en réponse aux mouvements faciaux de l'utilisateur de sorte qu'une résonance caractéristique du filtre LC varie en réponse aux mouvements faciaux ; et
un condensateur de couplage (140) qui est couplé entre le deuxième noeud (N5) et un quatrième noeud (N6), dans lequel le quatrième noeud (N6) correspond à une sortie à couplage alternatif du filtre LC qui inclut une amplitude de signal détectée et une phase de signal détectée du filtre LC en réponse à des mouvements faciaux de l'utilisateur.

2. Dispositif selon la revendication 1, comprenant en outre un convertisseur de puissance (105) qui est configuré pour convertir la tension de batterie en la tension réduite, dans lequel le convertisseur de puissance (105) comprend un ou plusieurs parmi un circuit diviseur de tension et un circuit convertisseur numérique-analogique.

3. Dispositif selon la revendication 1, comprenant en outre un circuit de réglage de tension (150) qui reçoit la sortie à couplage alternatif en provenance du quatrième noeud (N6) et génère une sortie en courant alternatif mise à l'échelle au niveau d'un cinquième noeud (N7).

4. Dispositif selon la revendication 3, dans lequel l'circuit de réglage de tension (150) est configuré pour ajuster un ou plusieurs parmi : un décalage en courant continu pour la sortie en courant alternatif mise à l'échelle, et un ajustement d'amplitude de tension pour la sortie en courant alternatif mise à l'échelle.

5. Dispositif selon la revendication 1, le circuit inducteur (120) comprenant en outre un parmi un inducteur, une paire couplée magnétiquement d'inducteurs mutuels, et une paire d'inducteurs à couplage mutuel croisé.

6. Dispositif selon la revendication 2 incluant un monture destinée à être portée,
dans lequel l'amplitude des signaux d'impulsions au niveau du premier noeud (N4) est inférieure à la tension réduite et la fréquence des signaux d'impulsions est déterminée par le signal de fréquence d'entrée (RFFT_FREQ), et
dans lequel le circuit inducteur a une inductance caractéristique et le dispositif comprend en outre :
une pluralité d'antennes (170), chacune positionnée à un emplacement différent du monture destinée à être portée (195), chacune de la pluralité d'antennes (170) ayant une capacité de détection caractéristique qui varie sur la base d'une distance entre l'antenne correspondante de la pluralité d'antennes (170) et la peau de l'utilisateur ; et
un multiplexeur (160) qui est configuré pour coupler sélectivement une de la pluralité d'antennes (170) au deuxième noeud (N5) en réponse à un signal de commande, dans lequel le condensateur de détection correspond à la capacité de détection caractéristique de l'antenne sélectionnée de la pluralité d'antennes (170) et le filtre LC est formé par l'inductance caractéristique du circuit inducteur (120) et la capacité de détection caractéristique de l'antenne sélectionnée de la pluralité d'antennes.

7. Dispositif selon la revendication 1 incluant un monture destinée à être portée,
dans lequel le pilote d'impulsions (110) reçoit la tension réduite en tant que tension d'alimentation côté haut à partir d'un sixième noeud (N2), reçoit le signal de fréquence d'entrée (RFFT_FREQ) à partir d'un septième noeud (N3), génère les un ou plusieurs signaux d'impulsions au niveau du premier noeud (N4) et inclut :
un bloc logique qui génère un signal de commande de commutateur côté haut et un signal de commande de commutateur côté bas en réponse au signal de fréquence d'entrée (RFFT_FREQ) à partir du septième noeud (N3) ;
un bloc de pilotage de grille qui fournit un premier signal de pilotage de grille en réponse au signal de commande de commutateur côté haut, un deuxième signal de pilotage de grille en réponse au signal de commande de commutateur côté bas ;
un premier FET qui est sélectivement activé en réponse au premier signal de pilotage de grille pour coupler le sixième noeud (N2) au premier noeud (N4) ; et
un deuxième FET qui est sélectivement activé en réponse au deuxième signal de pilotage de grille pour coupler le premier noeud (N4) à un noeud d'alimentation côté bas ;
dans lequel le circuit inducteur a une inductance caractéristique, et
dans lequel le condensateur de détection (130) est couplé entre le deuxième noeud (N5) et le troisième noeud (N0) qui est le noeud d'alimentation côté bas.

8. Dispositif selon la revendication 7, dans lequel le premier FET et le deuxième FET sont tous deux des FET de type N, tous deux des FET de type P, ou comprennent une combinaison de FET de type N et de type P.

9. Dispositif selon la revendication 8, dans lequel le bloc logique et le bloc de pilotage de grille sont agencés pour fournir un fonctionnement commuté sans chevauchement du premier FET et du deuxième FET.

10. Dispositif selon la revendication 7, dans lequel le circuit inducteur (120) comprend une paire d'inducteurs à couplage mutuel croisé avec un premier inducteur et un deuxième inducteur, dans lequel le premier inducteur est couplé entre le premier noeud (N4) et un noeud commun avec une polarité désignée au niveau du premier noeud (N4), et dans lequel le deuxième inducteur est couplé entre le noeud commun et le deuxième noeud (N5) avec une polarité désignée au niveau du noeud commun.

11. Dispositif selon la revendication 7, comprenant en outre : un premier condensateur supplémentaire (132) et un deuxième condensateur supplémentaire (131), dans lequel :
le premier condensateur supplémentaire (132) est couplé entre le deuxième noeud (N5) et le noeud d'alimentation côté bas ;
le deuxième condensateur supplémentaire (131) est couplé entre le noeud d'alimentation côté bas et un noeud intermédiaire (N51) ; et
le circuit inducteur (120) comprend en outre une paire couplée magnétiquement d'inducteurs mutuels avec un premier inducteur (L1) et un deuxième inducteur (L2), où le premier inducteur (L1) est couplé entre le premier noeud (N4) et le deuxième noeud (N5) avec une polarité désignée au niveau du deuxième noeud (N5), et le deuxième inducteur (L2) est couplé entre le premier noeud (N4) et le noeud intermédiaire (N51) avec une polarité désignée au niveau du noeud intermédiaire (N51).
